(19) Europäisches Patentamt
European Patent Office
Office européen des brevets

(11) EP 0 655 475 B1

(12) # EUROPÄISCHE PATENTSCHRIFT

(45) Veröffentlichungstag und Bekanntmachung des Hinweises auf die Patenterteilung:
**05.02.1997 Patentblatt 1997/06**

(51) Int Cl.6: **C08J 3/03**, C08K 5/54, C08K 5/17, C08K 5/3435, C08K 5/357

(21) Anmeldenummer: **94118478.0**

(22) Anmeldetag: **24.11.1994**

(54) **Wässrige Dispersionen von Organopolysiloxanen**

Aqueous dispersions of organopolysiloxanes

Dispersions aqueux d'organopolysiloxanes

(84) Benannte Vertragsstaaten:
**AT BE CH DE ES FR GB IT LI NL**

(30) Priorität: **26.11.1993 DE 4340400**

(43) Veröffentlichungstag der Anmeldung:
**31.05.1995 Patentblatt 1995/22**

(73) Patentinhaber: **Wacker-Chemie GmbH**
**81737 München (DE)**

(72) Erfinder:
- **Oberneder, Stefan, Dr.**
  **D-84489 Burghausen (DE)**
- **Braun, Rudolf, Dr.**
  **D-84556 Kastl (DE)**
- **Braunsperger, Karl**
  **D-84489 Burghausen (DE)**
- **Heinrich, Alfred**
  **A-5122 Ach (AT)**

(56) Entgegenhaltungen:
**EP-A- 0 365 439** **EP-A- 0 378 952**
**EP-A- 0 415 254** **EP-A- 0 449 747**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 655 475 B1

## Beschreibung

Die Erfindung betrifft wäßrige Dispersionen von Organopolysiloxanen, die sich nach Entfernen von Wasser in Elastomere überführen lassen, Verfahren zu deren Herstellung und deren Verwendung als Dicht- und Beschichtungsstoffe.

Maßnahmen zum Umweltschutz zwingen in zunehmendem Maße zur Vermeidung organischer Lösungsmittel in chemischen Zubereitungen. Demzufolge finden immer mehr wäßrige Systeme Verwendung.

Wäßrige Dispersionen von Organopolysiloxanen sind an sich vielfach bekannt. Der grundsätzliche Aufbau solcher Dispersionen, die bereits bei Raumtemperatur zu Elastomeren vulkanisieren, setzt sich aus einem linearen Polymeren, einer Vernetzerkomponente und einem Vernetzungskatalysator zusammen. Im allgemeinen wird eine wäßrige Emulsion von Polydiorganosiloxanen vorgelegt, deren Endgruppen kondensationsfähige Gruppen aufweisen. Diese hochmolekularen Polysiloxane werden entweder direkt emulgiert oder meist in Emulsion nach herkömmlichen Verfahren durch Polymerisation, Kondensation und Äquilibrierung aus linearen oder cyclischen niedermolekularen Polysiloxanen hergestellt. Die Polymeremulsion wird im allgemeinen dann mit einer Vernetzerkomponente und Kondensationskatalysator jeweils in Substanz oder als Emulsion sowie weiteren Bestandteilen, wie Füllstoffen, Haftvermittlern, etc. vermischt, wobei es sich bei dem Katalysator fast ausschließlich um (Organo-)Metallverbindungen handelt.

Die nahezu ausnahmslos als Katalysatoren eingesetzten (Organo-)Metallkatalysatoren haben den Nachteil, daß sie zum einen die Lagerstabilität der unvulkanisierten Massen aber auch die Beständigkeit der ausvulkanisierten Elastomere beeinträchtigen und zum anderen als toxikologisch bedenklich gelten. Bei einer Vielzahl der bisherigen Entwicklungen stellt die sehr aufwendige, zeit- und damit kostenintensive Herstellung der wäßrigen Emulsionen einen Nachteil dar. Diese Probleme resultieren hauptsächlich aus einer Reaktionszeit beanspruchenden Emulsionspolymerisation, -kondensation bzw. Equilibrierung der einzusetzenden Polydiorganosiloxane, die der Herstellung des Endprodukts durch Zumischung der weiteren Bestandteile vorangestellt werden muß. Ein weiterer Nachteil der meisten bisher bekannten, wäßrigen Emulsionen liegt im geringen Feststoffgehalt. Ein hoher Festgehalt bildet jedoch die Voraussetzung für eine geringe oder verschwindende Schrumpfung beim Ausvulkanisieren, die für die meisten Anwendungsbereiche wünschenswert ist.

Beispielsweise werden in der deutschen Anmeldung mit dem Aktenzeichen P 42 17 561.5 (Wacker-Chemie GmbH; angemeldet am 27. Mai 1992) bzw. der entsprechenden US-Anmeldung mit der Seriennummer USSN 08/056,088 wäßrige Dispersionen von Organopolysiloxanen aus kondensationsfähigem Organopolysiloxan, Siliconharz, Polyvinylalkohol, (Organo-)Metallkatalysator und aminofunktionellen Substanzen beschrieben, mit denen transparente Vulkanisate erhalten werden.

Des weiteren werden in US-A 5,045,231 (Wacker-Chemie GmbH; ausgegeben am 3. September 1991) bzw. der entsprechenden DE-A 39 32 025 wäßrige Dispersionen von Organopolysiloxanen aus kondensationsfähigen Organopolysiloxanen, (Organo-)Metallkatalysatoren, Organopolysiloxanharzen und Diorganosilanolaten beansprucht, wobei der Feststoffgehalt der Dispersionen bis zu 90 % betragen kann.

In DE-B 1037707 (Dow Corning; ausgegeben am 28. August 1958) wird ein Verfahren zur Herstellung von Emulsionen von hochmolekularen Organopolysiloxanen ausgehend von einer Emulsion von niedermolekularen Siloxanen offenbart. Die gewünschte Molekulargröße wird erreicht mit Hilfe stark saurer oder alkalischer Katalysatoren. Diese Emulsionen führen zu keinen Elastomeren.

Gemäß US-A 5,004,771 (Rhône Poulenc; ausgegeben am 2. April 1990) bzw. in der entsprechenden EP-A 365 439 wird in wäßriger Emulsion die sauere Kondensation eines OH-endblockierten Polydiorganosiloxans durchgeführt. Nach Neutralisation der Polymeremulsion werden die weiteren Bestandteile, wie Methylsiliconatlösung und nichtsilikatischer Füllstoff, nicht jedoch basischen Stickstoff aufweisende Verbindungen, zugesetzt. Die beschriebenen Emulsionen, die einen Feststoffgehalt von unter 90 % aufweisen, ergeben jedoch keine Elastomere.

Gegenstand der Erfindung sind wäßrige Dispersionen von Organopolysiloxanen, die frei sind von organischen Übergangsmetallverbindungen sowie organischen Verbindungen der Metalle der III., IV. und V. Hauptgruppe, herstellbar unter Verwendung der Ausgangsstoffe

(A) kondensationsfähige Gruppen aufweisendes Organopolysiloxan,
(B) Organopolysiloxanharz mit einem Molekulargewicht von maximal 20 000 und
(C) basischen Stickstoff aufweisende Verbindung.

Metalle der III., IV. und V. Hauptgruppe des Periodensystems sollen im Rahmen der vorliegenden Erfindung Aluminium, Gallium, Indium, Thallium, Germanium, Zinn, Blei, Antimon und Wismut umfassen.

Im Rahmen der vorliegenden Erfindung soll der Begriff "kondensationsfähig" auch eine gegebenenfalls vorausgehende Hydrolyse mitumfassen.

Die erfindungsgemäß eingesetzten, kondensationsfähige Gruppen aufweisenden Organopolysiloxane (A) sind solche der Formel

$$HO-[SiR^1{}_2O]_n-H \qquad (I),$$

worin

- $R^1$ gleiche oder verschiedene SiC-gebundene Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet und
- n eine ganze Zahl von mindestens 30 ist.

Beispiele für Kohlenwasserstoffreste $R^1$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste $R^1$ sind halogenierte Reste wie der 3-Chlorpropylrest, der 3,3,3-Trifluorpropylrest, Chlorphenylreste, Hexafluorpropylreste, wie der 1-Trifluormethyl-2,2,2-trifluorethylrest; der 2-(Perfluorhexyl)ethylrest, der 1,1,2,2-Tetrafluorethyloxypropylrest, der 1-Trifluormethyl-2,2,2-trifluorethyloxypropylrest, der Perfluorisopropyloxyethylrest, der Perfluorisopropyloxypropylrest; durch Aminogruppen substituierte Reste, wie der N-(2-aminoethyl)-3-aminopropylrest, der 3-Aminopropylrest und der 3-(Cyclohexylamino)propylrest; etherfunktionelle Reste, wie der 3-Methoxypropylrest und der 3-Ethoxypropylrest; cyanofunktionelle Reste, wie der 2-Cyanoethylrest; esterfunktionelle Reste, wie der Methacryloxypropylrest; epoxyfunktionelle Reste, wie der Glycidoxypropylrest und schwefelfunktionelle Reste, wie der 3-Mercaptopropylrest.

Bevorzugt als Reste $R^1$ sind Kohlenwasserstoffreste mit 1 bis 10 Kohlenstoffatomen, wobei besonders bevorzugt mindestens 80 %, insbesondere mindestens 90 %, der Reste $R^1$ Methylreste sind.

Der Durchschnittswert für die Zahl n in Formel (I) ist vorzugsweise so gewählt, daß das Organopolysiloxan der Formel (I) eine Viskosität von mehr als 30 $mm^2/s$, besonders bevorzugt von mehr als 10 000 $mm^2/s$, insbesondere von etwa 80 000 $mm^2/s$, jeweils gemessen bei einer Temperatur von 25°C, besitzt.

Obwohl in Formel (I) nicht angegeben, können bis zu 10 Molprozent der Diorganosiloxaneinheiten durch andere, meist jedoch nur als mehr oder weniger schwer vermeidbare Verunreinigungen vorliegende Siloxaneinheiten, wie $R^1{}_3SiO_{1/2}$-, $R^1SiO_{3/2}$- und $SiO_{4/2}$-Einheiten, ersetzt sein, wobei $R^1$ die vorstehend dafür angegebene Bedeutung hat.

Die Polydiorganosiloxane gemäß Formel (I) können nach in der Fachwelt bekannten Verfahren, beispielsweise durch Polymerisation bzw. Kondensation niedermolekularer cyclischer bzw. linearer, hydroxy- und/oder alkoxyendblockierter Organopolysiloxane, hergestellt werden. Bei dem erfindungsgemäß eingesetzten, kondensationsfähige Gruppen aufweisenden Organopolysiloxan (A) kann es sich um eine einzelne Art wie auch um ein Gemisch aus mindestens zwei Arten derartiger kondensationsfähige Gruppen aufweisender Organopolysiloxane handeln.

Bei den erfindungsgemäß eingesetzten Organopolysiloxanharzen mit einem Molekulargewicht von maximal 20 000 (B) handelt es sich um solche aus Einheiten der allgemeinen Formel

$$(RO)_eR^2{}_aSiO_{\frac{4-a-e}{2}} \qquad (II),$$

wobei

- $R^2$ gleich oder verschieden sein kann und eine für $R^1$ angegebene Bedeutung hat,
- R gleich oder verschieden sein kann und Wasserstoffatom oder Alkylrest mit 1 bis 6 Kohlenstoffatomen bedeutet,
- a 0, 1, 2 oder 3 und
- e 0, 1, 2 oder 3 ist, mit der Maßgabe, daß die Summe aus a und e kleiner oder gleich 3 ist und a sowie e jeweils durchschnittlich größer Null sind.

Der durchschnittliche Wert von a ist bevorzugt eine Zahl zwischen 0,5 und 1,95, insbesondere zwischen 0,8 und 1,8.

Der durchschnittliche Wert von e ist bevorzugt eine Zahl zwischen 0,01 und 1, insbesondere zwischen 0,01 und 0,5.

Obwohl durch die Formel (II) nicht ausgedrückt, kann das Organopolysiloxanharz, bedingt durch seine Herstellung, bis zu 10 Gewichtsprozent Si-gebundene Chloratome enthalten.

Beispiele für Rest $R^2$ sind die für $R^1$ angegebenen Beispiele für Kohlenwasserstoffreste, wobei Methyl-, Ethyl-, Vinyl- und Phenylreste bevorzugt und Methylreste besonders bevorzugt sind.

Bevorzugte Reste R sind Wasserstoffatom und Alkylgruppen mit 1 bis 4 Kohlenstoffatomen, wobei Wasserstoffatom, Methyl- und Ethylreste besonders bevorzugt sind.

Das erfindungsgemäß eingesetzte Organopolysiloxanharz (B) hat ein Molekulargewicht von bevorzugt höchstens 10 000, besonders bevorzugt höchstens 4 000.

Das erfindungsgemäß eingesetzte Organopolysiloxanharz (B) kann nach an sich bekannten Verfahren, wie beispielsweise durch Kondensation von niedermolekularen Organopolysiloxan-harzen in Dispersion, hergestellt werden, wobei die niedermolekularen Organopolysiloxanharze darstellbar sind durch Solvolyse und Kondensation von einer Lösung der entsprechenden Silane mit Si-gebundenen Chloratomen in einem mit Wasser nicht mischbaren Lösungsmittel mittels eines Alkohol/Wasser-Gemisches.

Anstelle des als Komponente (B) eingesetzten Organopolysiloxanharzes kann auch kondensationsfähige Gruppen aufweisendes Organosilan und/oder dessen Teilhydrolysate eingesetzt werden, was jedoch nicht Gegenstand der vorliegenden Erfindung ist.

Beispiele für solche Organosilane sind alle Organosilane, die bereits bisher in durch Kondensation vernetzenden Organopolysiloxanmassen eingesetzt werden können, wie etwa Alkoxy-, Acetoxy- und Oximosilane.

Zur Herstellung der erfindungsgemäßen wäßrigen Dispersionen von Organopolysiloxanen wird Organopolysiloxanharz (B) in Mengen von vorzugsweise 0,1 bis 100 Gewichtsteilen, besonders bevorzugt 0,5 bis 35 Gewichtsteilen, insbesondere 2 bis 20 Gewichtsteilen, jeweils bezogen auf 100 Gewichtsteile kondensationsfähige Gruppen aufweisendes Organopolysiloxan (A), eingesetzt.

Bei dem erfindungsgemäß eingesetzten Organopolysiloxanharz (B) kann es sich um eine einzelne Art wie auch um ein Gemisch aus mindestens zwei Arten derartiger Organopolysiloxanharze handeln.

Bei den erfindungsgemäß eingesetzten, basischen Stickstoff aufweisenden Verbindungen (C) handelt es sich vorzugsweise um solche ausgewählt aus der Gruppe bestehend aus Verbindungen der Formel

$$NR^3_3 \qquad \text{(III)},$$

wobei $R^3$ gleich oder verschieden sein kann und Wasserstoffatom oder Kohlenwasserstoffreste, die gegebenenfalls mit Hydroxygruppen, Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet,
mit der Maßgabe, daß in Formel (III) höchstens zwei $R^3$ die Bedeutung von Wasserstoffatom haben,
aliphatische cyclische Amine, wie beispielsweise Piperidin und Morpholin sowie
Organosiliciumverbindungen mit mindestens einem basischen Stickstoff aufweisenden organischen Rest aus Einheiten der Formel

$$R^4_bY_cSi(OR^5)_dO_{\frac{4-b-c-d}{2}} \qquad \text{(IV)},$$

worin

- $R^4$ gleich oder verschieden sein kann und einen einwertigen, SiC-gebundenen, von basischem Stickstoff freien organischen Rest bedeutet,
- $R^5$ gleich oder verschieden sein kann und Wasserstoffatom, einen Alkylrest, Alkalimetallkation, Ammonium- oder Phosphoniumgruppe bedeutet,
- Y gleich oder verschieden sein kann und einen einwertigen, SiC-gebundenen Rest mit basischem Stickstoff bedeutet,
- b 0, 1, 2, oder 3,
- c 0, 1, 2, 3 oder 4 und
- d 0, 1, 2 oder 3 ist,

mit der Maßgabe, daß die Summe aus b, c und d kleiner oder gleich 4 ist und pro Molekül mindestens ein Rest Y anwesend ist.

Bei den gegebenenfalls substituierten Kohlenwasserstoffresten $R^3$ handelt es sich vorzugsweise um solche mit 1

bis 18 Kohlenstoffatomen.

Bei Rest $R^4$ handelt es sich vorzugsweise um Kohlenwasserstoffreste mit 1 bis 18 Kohlenstoffatomen, wobei der Methyl-, Ethyl- und Propylrest besonders bevorzugt sind, insbesondere der Methylrest.

Beispiele für Rest $R^3$ und $R^4$ sind jeweils unabhängig voneinander die für $R^1$ angegebenen Beispiele für Kohlenwasserstoffreste.

Vorzugsweise handelt es sich bei Rest $R^5$ um Wasserstoffatom, Methyl-, Ethylrest und Alkalimetallkation, wobei Wasserstoffatom, Methyl-, Ethylrest, Natrium- und Kaliumkation besonders bevorzugt sind.

Beispiele für Rest $R^5$ sind die für Rest R angegebenen Kohlenwasserstoffreste, die Kationen der Alkalimetalle, wie die von Lithium, Natrium, Kalium, Rubidium und Cäsium, sowie Reste der Formel

$$^{+}NR^6{}_4 \qquad (V)$$

oder

$$^{+}PR^6{}_4 \qquad (VI),$$

wobei $R^6$ gleich oder verschieden sein kann und Kohlenwasserstoffrest mit 1 bis 6 Kohlenstoffatomen bedeutet.

Vorzugsweise sind die Reste Y solche der Formel

$$R^7{}_2NR^8- \qquad (VII),$$

worin $R^7$ gleich oder verschieden sein kann und Wasserstoff, Alkyl-, Cycloalkyl- oder Aminoalkylreste bedeutet und $R^8$ zweiwertiger Kohlenwasserstoffrest bedeutet.

Die Beispiele für Alkyl- und Cycloalkylreste $R^1$ gelten im vollen Umfang auch für Alkyl- bzw. Cycloalkylreste $R^7$.

Vorzugsweise ist an jedes Stickstoffatom in den Resten der Formel (VII) mindestens ein Wasserstoffatom gebunden.

Bevorzugt handelt es sich bei Rest $R^8$ um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest $R^8$ sind der Methylen-, Ethylen-, Propylen-, Butylen-, Cyclohexylen-, Octadecylen-, Phenylen- und Butenylenrest.

Beispiele für Reste Y sind

$H_2N(CH_2)_3$-,
$H_2N(CH_2)_2NH(CH_2)_2$-,
$H_2N(CH_2)_2NH(CH_2)_3$-,
$H_2N(CH_2)_2$-,
$H_3CNH(CH_2)_3$-,
$C_2H_5NH(CH_2)_3$-,
$H_3CNH(CH_2)_2$-,
$C_2H_5NH(CH_2)_2$-,
$H_2N(CH_2)_4$-,
$H_2N(CH_2)_5$-,
$H(NHCH_2CH_2)_3$-,
$C_4H_9NH(CH_2)_2NH(CH_2)_2$-,
cyclo-$C_6H_{11}NH(CH_2)_3$-,
cyclo-$C_6H_{11}NH(CH_2)_2$-,
$(CH_3)_2N(CH_2)_3$-,
$(CH_3)_2N(CH_2)_2$-,
$(C_2H_5)_2N(CH_2)_3$- und
$(C_2H_5)_2N(CH_2)_2$- .

Bevorzugt handelt es sich bei Y um $H_2N(CH_2)_3$-, $H_2N(CH_2)_2NH(CH_2)_3$-, $H_3CNH(CH_2)_3$-, $C_2H_5NH(CH_2)_3$- und cyclo-$C_6H_{11}NH(CH_2)_3$-, wobei $H_2N(CH_2)_2NH(CH_2)_3$- und cyclo-$C_6H_{11}NH(CH_2)_3$- besonders bevorzugt sind.

Handelt es sich bei den Organosiliciumverbindungen aus Einheiten der Formel (IV) um Silane, so ist b bevorzugt

0, 1 oder 2, besonders bevorzugt 0 oder 1, c bevorzugt 1 oder 2, besonders bevorzugt 1, und d bevorzugt 1, 2 oder 3, besonders bevorzugt 2 oder 3, mit der Maßgabe, daß die Summe aus b, c und d gleich 4 ist.

Beispiele für die erfindungsgemäßen Silane der Formel (IV) sind

$H_2N(CH_2)_3\text{-}Si(OCH_3)_3$
$H_2N(CH_2)_3\text{-}Si(OC_2H_5)_3$
$H_2N(CH_2)_3\text{-}Si(OCH_3)_2CH_3$
$H_2N(CH_2)_3\text{-}Si(OC_2H_5)_2CH_3$
$H_2N(CH_2)_3\text{-}Si(OH)_{3\text{-}x}(OM)_x$
$H_2N(CH_2)_3\text{-}Si(OH)_{2\text{-}y}(OM)_yCH_3$
$H_2N(CH_2)_2NH(CH_2)_3\text{-}Si(OCH_3)_3$
$H_2N(CH_2)_2NH(CH_2)_3\text{-}Si(OC_2H_5)_3$
$H_2N(CH_2)_2NH(CH_2)_3\text{-}Si(OCH_3)_2CH_3$
$H_2N(CH_2)_2NH(CH_2)_3\text{-}Si(OC_2H_5)_2CH_3$
$H_2N(CH_2)_2NH(CH_2)_3\text{-}Si(OH)_{3\text{-}x}(OM)_x$
$H_2N(CH_2)_2NH(CH_2)_3\text{-}Si(OH)_{2\text{-}y}(OM)_yCH_3$
cyclo-$C_6H_{11}NH(CH_2)_3\text{-}Si(OCH_3)_3$
cyclo-$C_6H_{11}NH(CH_2)_3\text{-}Si(OC_2H_5)_3$
cyclo-$C_6H_{11}NH(CH_2)_3\text{-}Si(OCH_3)_2CH_3$
cyclo-$C_6H_{11}NH(CH_2)_3\text{-}Si(OC_2H_5)_2CH_3$
cyclo-$C_6H_{11}NH(CH_2)_3\text{-}Si(OH)_{3\text{-}x}(OM)_x$ und
cyclo-$C_6H_{11}NH(CH_2)_3\text{-}Si(OH)_{2\text{-}y}(OM)_yCH_3$,
wobei
$H_2N(CH_2)_2NH(CH_2)_3\text{-}Si(OCH_3)_3$
$H_2N(CH_2)_2NH(CH_2)_3\text{-}Si(OC_2H_5)_3$
$H_2N(CH_2)_2NH(CH_2)_3\text{-}Si(OCH_3)_2CH_3$
$H_2N(CH_2)_2NH(CH_2)_3\text{-}Si(OC_2H_5)_2CH_3$
$H_2N(CH_2)_2NH(CH_2)_3\text{-}Si(OH)_{3\text{-}x}(ONa)_x$
$H_2N(CH_2)_2NH(CH_2)_3\text{-}Si(OH)_{2\text{-}y}(ONa)_yCH_3$
cyclo-$C_6H_{11}NH(CH_2)_3\text{-}Si(OCH_3)_3$
cyclo-$C_6H_{11}NH(CH_2)_3\text{-}Si(OC_2H_5)_3$
cyclo-$C_6H_{11}NH(CH_2)_3\text{-}Si(OCH_3)_2CH_3$
cyclo-$C_6H_{11}NH(CH_2)_3\text{-}Si(OC_2H_5)_2CH_3$
cyclo-$C_6H_{11}NH(CH_2)_3\text{-}Si(OH)_{3\text{-}x}(ONa)_x$ sowie
cyclo-$C_6H_{11}NH(CH_2)_3\text{-}Si(OH)_{2\text{-}y}(ONa)_yCH_3$ bevorzugt und
$H_2N(CH_2)_2NH(CH_2)_3\text{-}Si(OCH_3)_3$
$H_2N(CH_2)_2NH(CH_2)_3\text{-}Si(OCH_3)_2CH_3$
cyclo-$C_6H_{11}NH(CH_2)_3\text{-}Si(OCH_3)_3$
cyclo-$C_6H_{11}NH(CH_2)_3\text{-}Si(OCH_3)_2CH_3$
$H_2N(CH_2)_2NH(CH_2)_3\text{-}Si(OH)_{3\text{-}x}(ONa)_x$ und
$H_2N(CH_2)_2NH(CH_2)_3\text{-}Si(OH)_{2\text{-}y}(ONa)_yCH_3$ besonders bevorzugt

sind, mit x gleich 0, 1, 2 oder 3, y gleich 0, 1 oder 2 und M gleich Kation des Natriums oder Kaliums.

Silane der Formel (IV) sind handelsübliche Produkte und können nach in der Siliciumchemie gängigen Verfahren hergestellt werden.

Falls es sich bei der Organosiliciumverbindung aus Einheiten der Formel (IV) um Organopolysiloxane handelt, ist der durchschnittliche Wert von b vorzugsweise zwischen 0,5 und 2,5, besonders bevorzugt zwischen 1,4 und 2,0, der durchschnittliche Wert von c vorzugsweise zwischen 0,01 und 1,0, besonders bevorzugt zwischen 0,01 und 0,6 und der durchschnittliche Wert von d vorzugsweise zwischen 0 und 2,0, besonders bevorzugt zwischen 0 und 0,2, mit der Maßgabe, daß die Summe aus b, c und d kleiner oder gleich 3 ist.

Die erfindungsgemäß eingesetzten Organopolysiloxane aus Einheiten der Formel (IV) haben eine Viskosität bei 25°C von vorzugsweise 5 bis $10^5$ $mm^2/s$, besonders bevorzugt von 10 bis $10^4$ $mm^2/s$.

Beispiele für die erfindungsgemäß eingesetzten Organopolysiloxane aus Einheiten der Formel (IV) sind

$$\begin{array}{c} H_2N(CH_2)_2NH(CH_2)_3 \\ | \\ (CH_3)_3SiO\,[(CH_3)_2SiO]_k\,[CH_3SiO]_m\,Si(CH_3)_3 \end{array} \qquad (IVa)$$

und

$$\begin{array}{c} cyclo\text{-}C_6H_{11}NH(CH_2)_3 \\ | \\ (CH_3)_3SiO\,[(CH_3)_2SiO]_k\,[CH_3SiO]_m\,Si(CH_3)_3 \end{array} \qquad (IVb),$$

wobei das Verhältnis von k zu m zwischen 2:3 und 9:1 und die Summe von k und m zwischen 10 und 1000 liegt, sowie

$$\begin{array}{c} H_2N(CH_2)_2NH(CH_2)_3 \\ | \\ [(CH_3)_2SiO]_o\,[SiO_{3/2}]_p\,[(CH_3)_3SiO_{1/2}]_r \end{array} \qquad (IVc)$$

und

$$\begin{array}{c} cyclo\text{-}C_6H_{11}NH(CH_2)_3 \\ | \\ [(CH_3)_2SiO]_o\,[SiO_{3/2}]_p\,[(CH_3)_3SiO_{1/2}]_r \end{array} \qquad (IVd),$$

wobei die Summe aus o+p+r zwischen 10 und 1000, das Verhältnis von o : (o+p+r) zwischen 0 und 0,9, insbesondere zwischen 0,2 und 0,7, das Verhältnis von p : (o+p+r) zwischen 0,05 und 0,6, insbesondere zwischen 0,1 und 0,5, und das Verhältnis von r : (o+p+r) zwischen 0,05 und 0,75, insbesondere zwischen 0,2 und 0,6, liegt.

Organopolysiloxane aus Einheiten der Formel (IV) sind handelsübliche Produkte und können nach in der Siliciumchemie gängigen Verfahren hergestellt werden.

Beispiele für Amine der Formel (III) sind Cyclohexylamin, Triethylamin, Dodecylamin, Diethyl-n-propylamin, Cyclohexylmethylamin, 2-Aminoethanol, 2-Amino-n-propanol, 2-Amino-2-methyl-1-propanol, 2-Dimethylamino-2-methyl-1-propanol, N,N-Diethylethanolamin, Ethylendiamin, Cocosfettamin, Cocosfettmethylamin, N,N-Dimethylethanolamin und Anilin.

Bevorzugt werden als Komponente (C) Organosiliciumverbindungen mit mindestens einem basischen Stickstoff aufweisenden organischen Rest aus Einheiten der Formel (IV), insbesondere Kalium-N-(2-aminoethyl)-3-aminopropylmethylsilanolat und Natrium-N-(2-aminoethyl)-3-aminopropylmethylsilanolat eingesetzt.

Bei der erfindungsgemäß eingesetzten basischen Stickstoff aufweisenden Verbindung (C) kann es sich um eine einzelne Art wie auch um ein Gemisch aus mindestens zwei Arten derartiger Verbindungen handeln.

Zur Herstellung der erfindungsgemäßen wäßrigen Dispersionen von Organopolysiloxanen wird Komponente (C) in einer solchen Menge eingesetzt, daß der Gehalt an basischem Stickstoff vorzugsweise 0,01 bis 5 Gewichtsteile, besonders bevorzugt 0,01 bis 1 Gewichtsteile, insbesondere 0,04 bis 0,5 Gewichtsteile, jeweils bezogen auf 100 Gewichtsteile kondensationsfähige Gruppen aufweisendes Organopolysiloxan (A), beträgt.

Die erfindungsgemäßen, wäßrigen Dispersionen von Organopolysiloxanen werden im allgemeinen durch Emulgatoren (D) stabilisiert. Es können kationaktive, anionaktive, ampholytische sowie nichtionische Emulgatoren verwendet werden. Diese Emulgatoren sowie deren Dosierung sind dem Fachmann hinreichend bekannt. Es kann eine Art von Emulgator, beispielsweise ein anionaktiver, es können auch Gemische von mindestens zwei Arten von Emulgatoren verwendet werden, beispielsweise ein Gemisch aus mindestens einem anionaktiven mit mindestens einem nichtionischen Emulgator.

Die Emulgatoren (D) können als solche der zu dispergierenden bzw. als Dispersion zu stabilisierenden Mischung zugegeben werden, sie können auch aus einem Vorläufer, beispielsweise der entsprechenden Säure, Base oder eines Salzes des eigentlichen Emulgators in der zu dispergierenden bzw. als Dispersion zu stabilisierenden Mischung durch chemische Reaktion(en) gebildet werden.

Die anionaktiven Emulgatoren sind vorzugsweise die Salze der bei der Emulsionspolymerisation zur Ausbildung des kondensationsfähige Gruppen aufweisenden Organopolysiloxans (A) verwendeten oberflächenaktiven Sulfonsäuren nach US-A 3,294,725 (D.E. Findley, Dow Corning Corporation; ausgegeben am 27. Dezember 1966), wo die oberflächenaktiven Sulfonsäuren und Salze davon angegeben sind. Die Alkali- oder Ammoniumsalze der Sulfonsäuren sind bevorzugt, insbesondere die Kaliumsalze.

Als Beispiele für die Sulfonsäuren seien aliphatisch substituierte Benzolsulfonsäuren, aliphatisch substituierte Naphthalinsulfonsäuren, aliphatische Sulfonsäuren, Silylalkylsulfonsäuren und aliphatisch substituierte Diphenylethersulfonsäuren genannt.

Des weiteren können als anionische Emulgiermittel auch Alkalisulforizinoleate, sulfonierte Glycerinester von Fettsäuren, Salze von sulfonierten einwertigen Alkoholestern, Amide von Aminosulfonsäuren, wie beispielsweise das Natriumsalz von Oleylmethyltaurid, Alkalisalze von sulfonierten aromatischen Kohlenwasserstoffen, wie Natrium-a-naphthalin-monosulfonat, Kondensationsprodukte von Naphthalinsulfonsäuren mit Formaldehyd und Sulfate, wie Ammoniumlaurylsulfat, Triethanolaminlaurylsulfat und Natriumlaurylethersulfat, verwendet werden.

Nichtionische Emulgatoren werden vorzugsweise zusätzlich zu anionaktivem Emulgator verwendet. Beispiele für derartige nichtionische Emulgatoren sind Saponine, Additionsprodukte von Fettsäuren mit Ethylenoxid, wie Dodecansäureester mit Tetraethylenoxid, Additionsprodukte von Ethylenoxid mit Sorbitantrioleat, Additionsprodukte von phenolischen Verbindungen mit Seitenketten mit Ethylenoxid, wie Additionsprodukte von Ethylenoxid mit Isododecylphenol, und Iminderivate, wie polymerisiertes Ethylenimin, Additionsprodukte von Alkoholen mit Ethylenoxid, wie Polyethylenglykol-(10)-isotridecylether.

Beispiele für kationaktive Emulgatoren sind Salze von Fettaminen, quaternäre Ammoniumverbindungen, quaternäre Verbindungen des Pyridins, Morpholins und Imidazolins.

Beispiele für ampholytische Emulgatoren sind langkettige substituierte Aminosäuren, wie N-Alkyl-di-(aminoethyl)-glycin, N-Alkyl-2-aminopropionat, sowie Betaine, wie (3-Acylaminopropyl)-dimethylglycin und Alkylimidazoliumbetaine.

Des weiteren können auch wasserlösliche Polymere, die in der Literatur als geeignet für die Stabilisierung von Dispersionen beschrieben werden, wie etwa Polyvinylalkohole, Polyvinylpyrrolidone, Polyvinylsulfate, Polyacrylate, Polyacrylamide und Malonsäure-Styrol-Copolymere oder auch Polysaccharide, als Emulgatoren zur Herstellung der erfindungsgemäßen Dispersionen eingesetzt werden.

Falls Emulgator (D) eingesetzt wird, handelt es sich bevorzugt um anionaktive Emulgatoren, nichtionische Emulgatoren sowie deren Gemische, besonders bevorzugt um Alkalisalze von Organosulfonsäuren, Organopolyglycolether sowie Polyvinylalkohole.

Zur Herstellung der erfindungsgemäßen, wäßrigen Dispersionen von Organopolysiloxanen wird bevorzugt Emulgator (D) eingesetzt.

Die für die Stabilisierung der erfindungsgemäßen wäßrigen Dispersionen von Organopolysiloxanen vorteilhafte Menge an Emulgator ist stark von der Zusammensetzung der jeweiligen Dispersion abhängig. Bezogen auf 100 Gewichtsteile kondensationsfähige Gruppen aufweisendes Organopolysiloxan (A) genügen im allgemeinen 0,5 bis 10 Gewichtsteile an Emulgator(en).

Des weiteren können die erfindungsgemäßen wäßrigen Dispersionen von Organopolysiloxanen Füllstoffe (E) enthalten.

Beispiele für Füllstoffe (E) sind nicht verstärkende Füllstoffe, also Füllstoffe mit einer BET-Oberfläche von bis zu 50 $m^2/g$, wie Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver; verstärkende Füllstoffe, also Füllstoffe mit einer BET-Oberfläche von mehr als 50 $m^2/g$, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest, sowie Kunststoffasern. Die genannten Füllstoffe können hydrophobiert sein, beispielsweise durch die Behandlung mit Organosilanen bzw. -siloxanen oder durch Veretherung von Hydroxylgruppen zu Alkoxygruppen.

Falls Füllstoffe (E) eingesetzt werden, handelt es sich um Mengen von vorzugsweise 0,1 bis 200 Gewichtsteilen, besonders bevorzugt 0,5 bis 100 Gewichtsteilen, jeweils bezogen auf 100 Gewichtsteile kondensationsfähige Gruppen aufweisendes Organopolysiloxan (A). Die eingesetzte Menge an Füllstoff (E) kann in weiten Bereichen variiert werden

und richtet sich insbesondere nach dem jeweiligen Anwendungszweck der erfindungsgemäßen Dispersionen.

Ferner können die erfindungsgemäßen wäßrigen Dispersionen von Organopolysiloxanen Zusatzstoffe (F), vorzugsweise ausgewählt aus der Gruppe der Haftvermittler, Weichmacher, Schaumverhütungsmittel, Thixotropier- und Dispergiermittel, Pigmente, lösliche Farbstoffe, Fungizide, Riechstoffe sowie der organischen, in Bezug auf die Dispersionen inerten Lösungsmittel, enthalten.

Beispiele für Haftvermittler, die zur Verbesserung der Haftung der aus den erfindungsgemäßen wäßrigen Dispersionen nach Entfernen ihrer Lösungsmittelanteile erhaltenen elastomeren Produkte auf dem Untergrund, auf dem die erfindungsgemäßen Dispersionen aufgebracht worden sind, zugesetzt werden, sind aminofunktionelle Silane, wie N-(2-Aminoethyl)-3-aminopropyltrialkoxysilane, bei denen der Alkoxyrest ein Methoxy-, Ethoxy-, n-Propoxy- oder Isopropoxyrest ist.

Beispiele für Weichmacher sind bei Raumtemperatur flüssige, durch Trimethylsiloxygruppen endblockierte Dimethylpolysiloxane mit einer Viskosität von mindestens 10 $mm^2/s$.

Beispiele für organische, in Bezug auf die Dispersionen inerte Lösungsmittel sind Kohlenwasserstoffe, wie Petrolether verschiedener Siedebereiche, n-Pentan, n-Hexan, Hexan-Isomerengemisch, Toluol und Xylol.

Beispiele für Thixotropiermittel sind Carboxymethylcellulose und Polyvinylalkohol.

Beispiele für Dispergiermittel sind Polyacrylsäuresalze und Polyphosphate.

Die genannten Thixotropier- und Dispergiermittel haben teilweise auch emulgierende Eigenschaften, so daß sie als Emulgatoren benutzt werden können.

Von jeder der vorstehend als mögliche Komponente für die erfindungsgemäßen wäßrigen Dispersionen genannten Gruppen von Stoffen kann jeweils als eine Komponente ein Stoff dieser Gruppe oder auch ein Gemisch aus mindestens zwei verschiedenen dieser Stoffe verwendet werden.

Die erfindungsgemäßen wäßrigen Dispersionen von Organopolysiloxanen besitzen vorzugsweise pH-Werte von 5 bis 13, besonders bevorzugt von 6 bis 11.

Bei den erfindungsgemäßen wäßrigen Dispersionen von Organopolysiloxanen können Feststoffgehalte von bis zu 95 Gewichtsprozent erreicht werden. Niedrigere Feststoffgehalte sind selbstverständlich möglich. Selbst bei erfindungsgemäßen, wäßrigen Silicondispersionen, die keine Füllstoffe enthalten, kann ein Feststoffgehalt von über 90% erzielt werden. Als Feststoffgehalt ist hier der Gewichtsanteil aller Bestandteile der Dispersion außer Wasser und, falls verwendet, organischem Lösungsmittel am Gesamtgewicht der Dispersion zu verstehen.

Die erfindungsgemäßen wäßrigen Dispersionen von Organopolysiloxanen können je nach Anwendung standfest oder fließfähig sein.

Bevorzugt handelt es sich bei den erfindungsgemäßen Organosiloxandispersionen um solche, die hergestellt werden unter Verwendung der Komponenten (A), (B), (C), (D), Wasser sowie gegebenenfalls (E) und (F). Weitere Stoffe werden vorzugsweise nicht eingesetzt.

Grundsätzlich können die erfindungsgemäßen, wäßrigen Dispersionen nach beliebigen, bisher bekannten Verfahren hergestellt werden.

Als wesentlich vereinfachte und damit ökonomische Herstellungsweise ergibt sich aus der erfindungsgemäßen Zusammensetzung der wäßrigen Dispersionen von Organopolysiloxanen ein Verfahren (Verfahren 1), das dadurch gekennzeichnet ist, daß alle Bestandteile der Dispersion außer Füllstoff (E) miteinander vermischt und gemeinsam dispergiert werden. Danach kann, falls erwünscht, sofort der Füllstoff (E) in die Dispersion eingearbeitet werden.

Nach einer anderen Verfahrensweise (Verfahren 2) werden alle Bestandteile der Dispersion außer Komponente (C) und Füllstoff (E) miteinander vermischt und gemeinsam dispergiert. Danach werden Komponente (C) sowie gegebenenfalls Füllstoff (E) in die Dispersion eingearbeitet.

Bevorzugt werden die erfindungsgemäßen Dispersionen nach dem Verfahren 2 hergestellt.

Das Emulgieren bzw. Dispergieren kann in üblichen, zur Herstellung von Emulsionen bzw. Dispersionen geeigneten Mischgeräten, wie beispielsweise schnellaufende Stator-Rotor-Rührgeräte nach Prof. P. Willems, bekannt unter dem registrierten Warenzeichen "Ultra-Turrax", erfolgen. Hierzu sei noch auf Ullmanns Encyklopädie der Technischen Chemie, Urban & Schwarzenberg, München, Berlin, 3. Auflage, Band 1, Seite 720 ff verwiesen.

Selbstverständlich kann die erfindungsgemäße Dispersion auch auf andere Weise hergestellt werden. Es hat sich jedoch gezeigt, daß die Verfahrensweise kritisch ist und nicht alle Herstellungsarten Dispersionen ergeben, die nach Entfernen von Wasser zu Elastomere führen.

Die erfindungsgemäßen Verfahren haben den Vorteil, daß sie sehr einfach in der Durchführung sind und wäßrige Dispersionen mit sehr hohen Feststoffgehalten hergestellt werden können.

Die erfindungsgemäßen Verfahren haben ferner den Vorteil, daß die einzelnen Bestandteile der wäßrigen Dispersion von Organopolysiloxanen ohne Vorbehandlungen eingesetzt werden können, insbesondere entfällt die häufig beschriebene Kondensation der Polyorganosiloxankomponente vor dem Emulgieren sowie die Kondensation der Siliconharzkomponente.

Die erfindungsgemäßen Verfahren haben also den Vorteil, daß die wäßrigen Dispersionen in einem einzigen Arbeitsgang hergestellt werden können, ohne daß Reifezeiten während der Herstellung abgewartet werden müssen,

welche den Herstellungsprozeß verkomplizieren und verlangsamen würden.

Das erfindungsgemäße Verfahren kann diskontinuierlich wie auch kontinuierlich durchgeführt werden.

Die erfindungsgemäßen wäßrigen Dispersionen haben den Vorteil, daß sie frei von organischen Übergangsmetallverbindungen sowie organischen Verbindungen der Metalle der III., IV. und V. Hauptgruppe sind, wodurch u.a. eine hohe Lagerstabilität der Dispersionen bedingt ist. Vorzugsweise sind die erfindungsgemäßen, wäßrigen Dispersionen bei Raumtemperatur und dem Druck der umgebenden Atmosphäre über einen Zeitraum von mindestens mehreren Jahren lagerstabil.

Die erfindungsgemäßen wäßrigen Dispersionen von Organopolysiloxanen können für alle Zwecke eingesetzt werden, für die auch bisher wäßrige Dispersionen von Organopolysiloxanen verwendet werden. Sie können beispielsweise als Dichtungsmassen, Farben, Anstrichsysteme und als elektrisch isolierende bzw. leitende, hydrophobe, klebrige Stoffe abweisende Beschichtungssysteme oder als Grundlage bzw. Zusätze zu solchen Systemen dienen.

Die erfindungsgemäßen wäßrigen Dispersionen von Organopolysiloxanen härten schon bei Raumtemperatur innerhalb kurzer Zeit nach Verdampfen des Lösungsmittelanteils, d.h. des Wassers und ggf. organischen Lösungsmittels, zu Elastomeren aus.

Die erfindungsgemäßen wäßrigen Dispersionen, insbesondere solche, die unter Verwendung von Polyvinylalkoholen hergestellt wurden, haben den Vorteil, daß sie in dünnen Schichten zu transparenten Elastomeren aushärten.

Die erfindungsgemäßen wäßrigen Dispersionen haben den weiteren Vorteil, daß sie auf vielen Substraten, wie beispielsweise Papier, Textilien, mineralischen Baustoffen, Kunststoffen, Holz und vielen anderen Unterlagen, festhaftende Überzüge bilden. Das Beschichten kann dabei z.B. durch Streichen, Walzen, Tauchen oder Spritzen erfolgen.

Als bevorzugtes Einsatzgebiet bieten sich die Verwendung als Dichtungsmassen und Beschichtungsmaterialien an. Als Beispiele seien Fugendichtungsmassen für Fassaden und Gebäude sowie Fensterverglasungen genannt sowie der Einsatz als Dichtungsmassen im Sanitärbereich. Beispiele für Beschichtungen sind u.a. Fassadenbeschichtungen und -imprägnierungen, elastische Fassadenfarben, Textil- und Gewebebeschichtungen.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25°C. Sofern nicht anders angegeben, werden die nachstehenden Beispiele bei einem Druck der umgebenden Atmosphäre, also etwa 1000 hPa, und bei Raumtemperatur, also bei etwa 22°C, bzw. bei einer Temperatur, die sich beim Zusammengeben der Reaktanden bei Raumtemperatur ohne zusätzliche Heizung oder Kühlung einstellt, durchgeführt.

Die Aminzahl entspricht zahlenmäßig dem Wert, der den Verbrauch in ml von 1-n HCl bei der Neutralisation von 1 g aminofunktionelle Organosiliciumverbindung angibt.

Die Elastomereigenschaften werden jeweils nach den folgenden, genormten Prüfungen ermittelt:

| | |
|---|---|
| Reißfestigkeit : | DIN 53504-85S1 |
| Reißdehnung : | DIN 53504-85S1 |
| Modul : | DIN 53504-85S1 |
| Shore-A-Härte : | DIN 53505-87 |
| Weiterreißfestigkeit : | ASTM D624B-73 |

**Beispiel 1**

I) Herstellung einer wäßrigen Lösung von Kalium-N-(2-aminoethyl)-3-aminopropylmethylsilanolat

Zu einer Lösung von 63,7 g Kaliumhydroxyd (88 %ig in Wasser) in 200 g Wasser werden unter kräftigem Rühren 103 g N-(2-Aminoethyl)-3-aminopropylmethyldimethoxysilan (käuflich erhältlich unter der Bezeichnung "Silan GF 95" bei der Wacker-Chemie GmbH, München) zudosiert. Von der Mischung werden durch Erhitzen erst Methanol und dann etwa 70 g Wasser abdestilliert. Anschließend wird die Mischung durch Zugabe von Wasser auf 317 g Gesamtgewicht aufgefüllt. Es resultiert eine 40 prozentige Kalium-N-(2-aminoethyl)-3-aminopropylmethylsilanolatlösung.

323 g $\alpha,\omega$-Dihydroxypolydimethylsiloxan mit einer Viskosität von 80 000 $mm^2/s$, 16 g Organopolysiloxanharz der durchschnittlichen Formel $[(CH_3)_3SiO_{1/2}]_{1,1}[SiO_2]$ mit einem durchschnittlichen Molekulargewicht von 2000 und einem durchschnittlichen Ethoxygehalt von 2,1 Gewichtsprozent, bezogen auf das Harzmolekül, und 17 g Organopolysiloxanharz der durchschnittlichen Formel $[(CH_3)_2SiO]_{0,2}[(CH_3)SiO_{3/2}]_{0,8}$ mit einem durchschnittlichen Molekulargewicht von 3000 und einem durchschnittlichen Ethoxygehalt von 2,6 Gewichtsprozent, bezogen auf das Harzmolekül, werden gemeinsam mit 30 g einer 75 %igen wäßrigen Natriumdodecylbenzolsulfonatlösung (käuflich erhältlich unter der Bezeichnung "Marion A 375" bei der Fa. Hüls) und 50 g Wasser vermischt und mit Hilfe eines Ultra-Turrax-Mischers in eine Emulsion überführt. Nach Hinzufügen von 4 g der unter I) beschriebenen wäßrigen Lösung von Kalium-N-(2-aminoethyl)-3-aminopropylmethylsilanolat und 219 g gefällter Kreide erhält man eine cremig weiche, glatte, dauerhaft homogene standfeste Masse mit einem Festgehalt von 91 % und einem pH-Wert von 10,5, die luftdicht in Kartuschen

abgefüllt wird. Die Eigenschaften der so gelagerten Dispersion sind über einen Zeitraum von über 1 Jahr unverändert.

Aus der so erhaltenen Dispersion von Organopolysiloxanen werden 2 mm dicke Filme erzeugt, indem die wäßrige Dispersion auf eine Oberfläche aus Polytetrafluorethylen (PTFE) aufgetragen und das Wasser bei Raumtemperatur verdampfen gelassen wird. Zwei Wochen nach dem Auftragen bilden sich trockene, elastische Filme, die auf ihre Elastomereigenschaften hin untersucht werden. Angaben über die Elastomereigenschaften finden sich in Tabelle 1.

**Beispiel 2**

Die in Beispiel 1 beschriebene Verfahrensweise wird wiederholt mit der Abänderung, daß anstelle von 30 g einer 75 %igen wäßrigen Natriumdodecylbenzolsulfonatlösung 28 g einer 80 %ige wäßrigen Losung von Polyethylenglykol-(10)-isotridecylether (käuflich erhältlich unter der Bezeichnung "Arlypon IT 10" bei der Fa. Grünau) eingesetzt werden. Nach Hinzufügen von 219 g gefällter Kreide erhält man eine cremig weiche, glatte, dauerhaft homogene standfeste Masse mit einem Festgehalt von 91 % und einem pH-Wert von 10,0, die luftdicht in Kartuschen abgefüllt wird. Die Eigenschaften dieser so gelagerten Dispersion sind über einen Zeitraum von über 1 Jahr unverändert. Angaben über die Elastomereigenschaften finden sich in Tabelle 1.

**Beispiel 3**

Die in Beispiel 1 beschriebene Verfahrensweise wird wiederholt mit der Abänderung, daß anstelle von 30 g einer 75 %igen wäßrigen Natriumdodecylbenzolsulfonatlösung 30 g einer Mischung von einer 75 %igen wäßrigen Natriumdodecylbenzolsulfonatlösung und einer 80 %igen wäßrigen Lösung von Polyethylenglykol-(10)-isotridecylether (käuflich erhältlich unter der Bezeichnung "Arlypon IT 10" bei der Fa. Grünau) eingesetzt werden. Nach Hinzufügen von 219 g gefällter Kreide erhält man eine cremig weiche, glatte, dauerhaft homogene standfeste Masse mit einem Festgehalt von 91 % und einem pH-Wert von 10,0, die luftdicht in Kartuschen abgefüllt wird. Die Eigenschaften dieser so gelagerten Dispersion sind über einen Zeitraum von über 1 Jahr unverändert. Angaben über die Elastomereigenschaften finden sich in Tabelle 1.

**Beispiel 4**

Die in Beispiel 1 beschriebene Verfahrensweise wird wiederholt mit der Abänderung, daß anstelle der 30 g einer 75 %igen wäßrigen Natriumdodecylbenzolsulfonatlösung 30 g einer 80 %igen wäßrigen Lösung von Polyethylenglykol-(18)-phenol (käuflich erhältlich unter der Bezeichnung "Sapogenat T-180" bei der Fa. Hoechst) im Verhältnis 1:3 eingesetzt werden. Nach Hinzufügen von 219 g gefällter Kreide erhält man eine cremig weiche, glatte, dauerhaft homogene standfeste Masse mit einem Festgehalt von 91 % und einem pH-Wert von 10,0, die luftdicht in Kartuschen abgefüllt wird. Die Eigenschaften dieser so gelagerten Dispersion sind über einen Zeitraum von über 1 Jahr unverändert. Angaben über die Elastomereigenschaften finden sich in Tabelle 1.

**Beispiel 5**

200 g $\alpha,\omega$-Dihydroxypolydimethylsiloxan mit einer Viskosität von 80 000 $mm^2/s$, 12 g Organopolysiloxanharz mit der durchschnittlichen Formel $[(CH_3)_3SiO_{1/2}]_{1,1}[SiO_2]$ mit einem durchschnittlichen Molekulargewicht von 2000 und einem durchschnittlichen Ethoxygehalt von 2,1 Gewichtsprozent, bezogen auf das Harzmolekül, 6 g Organopolysiloxanharz mit der durchschnittlichen Formel $[(CH_3)_2SiO]_{0,2}[(CH_3)SiO_{3/2}]_{0,8}$ mit einem durchschnittlichen Molekulargewicht von 3000 und einem durchschnittlichen Ethoxygehalt von 2,6 Gewichtsprozent, bezogen auf das Harzmolekül, und 10 g 3-(2-Aminoethylamino)propyl-funktionellem Polydimethylsiloxan mit einer Viskosität von 1 000 $mm^2/s$ und einer Aminzahl von 0,3 (käuflich erhältlich unter der Bezeichnung "Finish WR 1300" bei der Wacker-Chemie GmbH) werden gemeinsam mit 50 g einer 10 %igen wäßrigen Lösung eines Polyvinylalkohols mit einem Molekulargewicht von 85000 und einer Verseifungszahl von 240 (käuflich erhältlich unter der Bezeichnung "Polyviol W 30/240" bei der Wacker-Chemie GmbH) vermischt und mit Hilfe eines Ultra-Turrax-Mischers in eine Emulsion überführt. Nach Hinzufügen von 2 g der in Beispiel 1 unter I) beschriebenen wäßrigen Lösung von Kalium-N-(2-aminoethyl)-3-aminopropylmethylsilanolat erhält man eine weiße, cremig weiche, glatte, dauerhaft homogene standfeste Masse mit einem Festgehalt von 84 % und einem pH-Wert von 8,0, die luftdicht in Kartuschen abgefüllt wird. Die Eigenschaften dieser so gelagerten Dispersion sind über einen Zeitraum von über 1 Jahr unverändert. Das vulkanisierte Produkt ist transparent. Aus der so erhaltenen Dispersion von Organopolysiloxanen werden 2 mm dicke, transparente Filme erzeugt, indem die wäßrige Dispersion auf eine Oberfläche aus Polytetrafluorethylen (PTFE) aufgetragen und das Wasser bei Raumtemperatur verdampfen gelassen wird. Zwei Wochen nach dem Auftragen bilden sich trockene, elastische Filme, die auf ihre Elastomereigenschaften hin untersucht werden. Angaben über die Elastomereigenschaften finden sich in Tabelle 1.

**Beispiel 6**

II) Herstellung einer wäßrigen Lösung von Kalium-N-(2-aminoethyl)-3-aminopropylsilanolat

Zu einer Lösung von 95,5 g Kaliumhydroxyd in 400 g Wasser werden unter kräftigem Rühren 111 g N-(2-Aminoethyl)-3-aminopropyltrimethoxysilan (käuflich erhältlich unter der Bezeichnung "Silan GF 91" bei der Wacker-Chemie GmbH, München) zudosiert. Von der Mischung werden durch Erhitzen erst Methanol und dann etwa 200 g Wasser abdestilliert. Anschließend wird die Mischung durch Zugabe von Wasser auf 367 g Gesamtgewicht aufgefüllt. Es resultiert eine 40-prozentige Kalium-N-(2-aminoethyl)-3-aminopropylsilanolatlösung.

Die in Beispiel 1 beschriebene Verfahrensweise wird wiederholt mit der Abänderung, daß anstelle der 4 g der unter I) beschriebenen wäßrigen Lösung von Kalium-N-(2-aminoethyl)-3-aminopropylmethylsilanolat 4 g der oben unter II) beschriebenen wäßrigen Lösung von Kalium-N-(2-aminoethyl)-3-aminopropylsilanolat eingesetzt werden. Nach Hinzufügen von 219 g gefällter Kreide erhält man eine cremig weiche, glatte, dauerhaft homogene standfeste Masse mit einem Festgehalt von 91 % und einem pH-Wert von 10,5, die luftdicht in Kartuschen abgefüllt wird. Die Eigenschaften dieser so gelagerten Dispersion sind über einen Zeitraum von über 1 Jahr unverändert. Angaben über die Elastomereigenschaften finden sich in Tabelle 1.

**Beispiel 7**

Die in Beispiel 1 beschriebene Verfahrensweise wird wiederholt mit der Abänderung, daß anstelle der 4 g der unter I) beschriebenen wäßrigen Lösung von Kalium-N-(2-aminoethyl)-3-aminopropylmethylsilanolat 5 g Kalium-N-(2-aminoethyl)-3-aminopropyltrimethoxysilan (käuflich erhältlich unter der Bezeichnung "Silan GF 91" bei der Wacker-Chemie GmbH) eingesetzt werden. Nach Hinzufügen von 219 g gefällter Kreide erhält man eine cremig weiche, glatte, dauerhaft homogene standfeste Masse mit einem Festgehalt von 91 % und einem pH-Wert von 9,5, die luftdicht in Kartuschen abgefüllt wird. Die Eigenschaften dieser so gelagerten Dispersion sind über einen Zeitraum von über 1 Jahr unverändert. Angaben über die Elastomereigenschaften finden sich in Tabelle 1.

**Beispiel 8**

Die in Beispiel 1 beschriebene Verfahrensweise wird wiederholt mit der Abänderung, daß anstelle der 4 g der unter I) beschriebenen wäßrigen Lösung von Kalium-N-(2-aminoethyl)-3-aminopropylmethylsilanolat 10 g 3-(Cyclohexylamino)propylfunktionelles Polydimethylsiloxan mit einer Viskosität von 200 $mm^2/s$ und einer Aminzahl von 2,5 (käuflich erhältlich unter der Bezeichnung "Haftvermittler AMS 61" bei der Wacker-Chemie GmbH) eingesetzt werden. Nach Hinzufügen von 219 g gefällter Kreide erhält man eine cremig weiche, glatte, dauerhaft homogene standfeste Masse mit einem Festgehalt von 91 % und einem pH-Wert von 9,0, die luftdicht in Kartuschen abgefüllt wird. Die Eigenschaften dieser so gelagerten Dispersion sind über einen Zeitraum von über 1 Jahr unverändert. Angaben über die Elastomereigenschaften finden sich in Tabelle 1.

**Beispiel 9**

Die in Beispiel 1 beschriebene Verfahrensweise wird wiederholt mit der Abänderung, daß anstelle der 4 g der unter I) beschriebenen wäßrigen Lösung von Kalium-N-(2-aminoethyl)-3-aminopropylmethylsilanolat 5 g Diethylamin eingesetzt werden. Nach Hinzufügen von 219 g gefällter Kreide erhält man eine cremig weiche, glatte, dauerhaft homogene standfeste Masse mit einem Festgehalt von 91 % und einem pH-Wert von 9,5, die luftdicht in Kartuschen abgefüllt wird. Die Eigenschaften dieser so gelagerten Dispersion sind über einen Zeitraum von über 1 Jahr unverändert. Angaben über die Elastomereigenschaften finden sich in Tabelle 1.

**Beispiel 10**

Die in Beispiel 1 beschriebene Verfahrensweise wird wiederholt mit der Abänderung, daß anstelle der 4 g der unter I) beschriebenen wäßrigen Lösung von Kalium-N-(2-aminoethyl)-3-aminopropylmethylsilanolat 10 g Cocosfettamin (käuflich erhältlich unter der Bezeichnung "Genamin CC 100 D" bei der Fa. Hoechst) eingesetzt werden. Nach Hinzufügen von 219 g gefällter Kreide erhält man eine cremig weiche, glatte, dauerhaft homogene standfeste Masse mit einem Festgehalt von 91 % und einem pH-Wert von 10,0, die luftdicht in Kartuschen abgefüllt wird. Die Eigenschaften dieser so gelagerten Dispersion sind über einen Zeitraum von über 1 Jahr unverändert. Angaben über die Elastomereigenschaften finden sich in Tabelle 1.

**Vergleichsbeispiel 1**

Die in Beispiel 1 beschriebene Verfahrensweise wird wiederholt mit der Abänderung, daß anstelle der 4 g der unter I) beschriebenen wäßrigen Lösung von Kalium-N-(2-aminoethyl)-3-aminopropylmethylsilanolat 4 g einer 42 %igen wäßrigen Lösung von Kalium-Methylsilanolat (käuflich erhältlich unter der Bezeichnung "BS 15" bei der Wacker-Chemie GmbH) eingesetzt werden. Nach Hinzufügen von 219 g gefällter Kreide erhält man eine cremig weiche, glatte, standfeste Masse mit einem Festgehalt von 91 % und einem pH-Wert von 10,0, die luftdicht in Kartuschen abgefüllt wird. Die auf diese Weise hergestellte Dispersion von Organopolysiloxanen vulkanisiert selbst nach einer Reife- bzw. Lagerzeit von 2 Monaten nicht zu einem Elastomer. Nach Abgabe des Wassers resultiert eine ölige, zähe Masse. Nach dreimonatiger Lagerung entmischt sich die Dispersion.

**Vergleichsbeispiel 2**

Die in Beispiel 1 beschriebene Verfahrensweise wird wiederholt mit der Abänderung, daß anstelle der 4 g der unter I) beschriebenen wäßrigen Lösung von Kalium-N-(2-aminoethyl)-3-aminopropylmethylsilanolat 4 g einer 30 %igen wäßrigen KOH-Lösung eingesetzt werden. Nach Hinzufügen von 219 g gefällter Kreide erhält man eine cremig weiche, glatte, standfeste Masse mit einem Festgehalt von 91 % und einem pH-Wert von 10,5, die luftdicht in Kartuschen abgefüllt wird. Die auf diese Weise hergestellte Dispersion von Organopolysiloxanen vulkanisiert selbst nach einer Reife- bzw. Lagerzeit von 2 Monaten nicht zu einem Elastomer. Nach Abgabe des Wassers resultiert eine ölige, zähe Masse.

**Vergleichsbeispiel 3**

Die in Beispiel 1 beschriebene Verfahrensweise wird wiederholt mit der Abänderung, daß anstelle der 4 g der unter I) beschriebenen wäßrigen Lösung von Kalium-N-(2-aminoethyl)-3-aminopropylmethylsilanolat 4 g einer 30 %igen wäßrigen Benzyltriammoniumhydroxid-Lösung eingesetzt werden. Nach Hinzufügen von 219 g gefällter Kreide erhält man eine cremig weiche, glatte, dauerhaft homogene standfeste Masse mit einem Festgehalt von 90 % und einem pH-Wert von 9,0, die luftdicht in Kartuschen abgefüllt wird. Die auf diese Weise hergestellte Dispersion von Organopolysiloxanen vulkanisiert selbst nach einer Reife- bzw. Lagerzeit von 2 Monaten nicht zu einem Elastomer. Nach Abgabe des Wassers resultiert eine unvulkanisierte, ölige, zähe Masse.

**Vergleichsbeispiel 4**

Die in Beispiel 1 beschriebene Verfahrensweise wird wiederholt mit der Abänderung, daß anstelle der 4 g der unter I) beschriebenen wäßrigen Lösung von Kalium-N-(2-aminoethyl)-3-aminopropylmethylsilanolat 2 g Dodecylbenzolsulfonsäure (käuflich erhältlich unter der Bezeichnung "Marlon AS-Säure" bei der Hüls AG) eingesetzt werden. Nach Hinzufügen von 219 g gefällter Kreide erhält man eine cremig weiche, glatte, dauerhaft homogene standfeste Masse mit einem Festgehalt von 91 % und einem pH-Wert von 6, die luftdicht in Kartuschen abgefüllt wird. Die auf diese Weise hergestellte Dispersion von Organopolysiloxanen vulkanisiert selbst nach einer Reife- bzw. Lagerzeit von 2 Monaten nicht zu einem Elastomer.

**Beispiel 11**

Die in Beispiel 1 beschriebene Verfahrensweise wird wiederholt mit der Abänderung, daß anstelle der 16 g $[(CH_3)_3SiO_{1/2}]_{1,1}[SiO_2]$ Siliconharz mit einem durchschnittlichen Molekulargewicht von 2000 und einem durchschnittlichen Ethoxygehalt von 2,1 Gewichtsprozent, bezogen auf das Harzmolekül, 16 g $[(CH_2{=}CH)(CH_3)_2SiO_{1/2}][SiO_2]$ mit einem durchschnittlichen Molekulargewicht von 1300 und einem durchschnittlichen Ethoxygehalt von 9,9 Gewichtsprozent, bezogen auf das Harzmolekül, eingesetzt werden. Nach Hinzufügen von 219 g gefällter Kreide erhält man eine cremig weiche, glatte, dauerhaft homogene standfeste Masse mit einem Festgehalt von 91 % und einem pH-Wert von 10,5, die luftdicht in Kartuschen abgefüllt wird. Die Eigenschaften dieser so gelagerten Dispersion sind über einen Zeitraum von über 1 Jahr unverändert. Angaben über die Elastomereigenschaften finden sich in Tabelle 1.

**Beispiel 12**

Die in Beispiel 1 beschriebene Verfahrensweise wird wiederholt mit der Abänderung, daß die 16 g $[(CH_3)_3SiO_{1/2}]_{1,1}$ $[SiO_2]$ Siliconharz mit einem durchschnittlichen Molekulargewicht von 2000 und einem durchschnittlichen Ethoxygehalt von 2,1 Gewichtsprozent, bezogen auf das Harzmolekül, weggelassen werden. Nach Hinzufügen von 219 g gefällter Kreide erhält man eine cremig weiche, glatte, dauerhaft homogene standfeste Masse mit einem Festgehalt von 91 %

und einem pH-Wert von 10,5, die luftdicht in Kartuschen abgefüllt wird. Die Eigenschaften dieser so gelagerten Dispersion sind über einen Zeitraum von über 1 Jahr unverändert. Angaben über die Elastomereigenschaften finden sich in Tabelle 1.

**Beispiel 13**

Die in Beispiel 1 beschriebene Verfahrensweise wird wiederholt mit der Abänderung, daß die 17 g $[(CH_3)_2SiO]_{0,2}[(CH_3)SiO_2]_{0,8}$ Siliconharz mit einem durchschnittlichen Molekulargewicht von 3000 und einem durchschnittlichen Ethoxygehalt von 2,6 Gewichtsprozent, bezogen auf das Harzmolekül, weggelassen werden. Nach Hinzufügen von 219 g gefällter Kreide erhält man eine cremig weiche, glatte, dauerhaft homogene standfeste Masse mit einem Festgehalt von 90 % und einem pH-Wert von 10,5, die luftdicht in Kartuschen abgefüllt wird. Die Eigenschaften dieser so gelagerten Dispersion sind über einen Zeitraum von über 1 Jahr unverändert. Angaben über die Elastomereigenschaften finden sich in Tabelle 1.

**Beispiel 14**

Die in Beispiel 1 beschriebene Verfahrensweise wird wiederholt mit der Abänderung, daß anstelle der 16 g $[(CH_3)_3SiO_{1/2}]_{1,1}[SiO_2]$ Siliconharz mit einem durchschnittlichen Molekulargewicht von 2000 und einem durchschnittlichen Ethoxygehalt von 2,1 Gewichtsprozent, bezogen auf das Harzmolekül, und der 17 g $[(CH_3)_2SiO]_{0,2}[(CH_3)SiO_2]_{0,8}$ mit einem durchschnittlichen Molekulargewicht von 3000 und einem durchschnittlichen Ethoxygehalt von 2,6 Gewichtsprozent, bezogen auf das Harzmolekül, 15 g $[(CH_3)_3SiO_{0,5}]_{1,1}[(CH_3)_2SiO]_{0,5}[(CH_3)SiO_{1,5}]_{1,8}[SiO_2]$ mit einem durchschnittlichen Molekulargewicht von 2500 und einem durchschnittlichen Ethoxygehalt von 2,3 Gewichtsprozent, bezogen auf das Harzmolekül, eingesetzt werden. Nach Hinzufügen von 219 g gefällter Kreide erhält man eine cremig weiche, glatte, dauerhaft homogene standfeste Masse mit einem Festgehalt von 91 % und einem pH-Wert von 10,5, die luftdicht in Kartuschen abgefüllt wird. Die Eigenschaften dieser so gelagerten Dispersion sind über einen Zeitraum von über 1 Jahr unverändert. Angaben über die Elastomereigenschaften finden sich in Tabelle 1.

**Beispiel 15**

Die in Beispiel 1 beschriebene Verfahrensweise wird wiederholt mit der Abänderung, daß anstelle der 50 g Wasser lediglich 20 g Wasser eingesetzt werden. Nach Hinzufügen von 219 g gefällter Kreide erhält man eine cremig weiche, glatte, dauerhaft homogene standfeste Masse mit einem Festgehalt von 95 % und einem pH-Wert von 10,5, die luftdicht in Kartuschen abgefüllt wird. Die Eigenschaften dieser Dispersion bleiben mindestens 3 Monate unverändert. Angaben über die Elastomereigenschaften finden sich in Tabelle 1.

Die mit Kreide gefüllte Dispersion aber auch die ungefüllte Emulsion vor Zugabe der Kreide kann mit Wasser auf Festgehalte bis 5 % und weniger verdünnt werden. Die hieraus resultierenden, über mindestens 6 Monate hinweg lagerstabilen Dispersionen können für Beschichtungen z.B. von Fassaden oder Geweben verwendet werden.

Tabelle 1

| Versuch | Reißfestigkeit ($N/mm^2$) | Reißdehnung (%) | Modul[1)] ($N/mm^2$) | Shore-A-Härte | Weiterreißfestigkeit (N/mm) |
|---|---|---|---|---|---|
| 1 | 0,7 | 1040 | 0,14 | 10 | 5,17 |
| 2 | 0,8 | 710 | 0,15 | 8 | 4,62 |
| 3 | 1,0 | 650 | 0,17 | 10 | 4,95 |
| 4 | 1,5 | 810 | 0,40 | 17 | 7,60 |
| 5 | 0,8 | 420 | 0,37 | 14 | 5,36 |
| 6 | 1,1 | 590 | 0,42 | 17 | 6,32 |
| 7 | 0,8 | 930 | 0,21 | 10 | 3,98 |
| 8 | 0,8 | 870 | 0,19 | 12 | 3,75 |
| 9 | 0,9 | 790 | 0,26 | 14 | 4,70 |
| 10 | 1,1 | 620 | 0,25 | 15 | 4,23 |
| 11 | 1,1 | 580 | 0,49 | 21 | 6,77 |
| 12 | 0,6 | 320 | 0,13 | 7 | 3,04 |
| 13 | 0,4 | 250 | 0,10 | 6 | 2,45 |

1) Zugfestigkeit bei 100 % Dehnung.

Tabelle 1 (fortgesetzt)

| Versuch | Reißfestigkeit (N/mm²) | Reißdehnung (%) | Modul[1)] (N/mm²) | Shore-A-Härte | Weiterreißfestigkeit (N/mm) |
|---|---|---|---|---|---|
| 14 | 1,2 | 420 | 0,50 | 23 | 4,77 |
| 15 | 0,9 | 900 | 0,23 | 13 | 5,56 |

1) Zugfestigkeit bei 100 % Dehnung.

## Patentansprüche

1. Wäßrige Dispersionen von Organopolysiloxanen, die frei sind von organischen Übergangsmetallverbindungen sowie organischen Verbindungen der Metalle der III., IV. und V. Hauptgruppe, herstellbar unter Verwendung der Ausgangsstoffe

   (A) kondensationsfähige Gruppen aufweisendes Organopolysiloxan der Formel

   $$HO\text{-}[SiR^1{}_2O]_n\text{-}H \qquad (I),$$

   worin

   $R^1$ gleiche oder verschiedene Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet und
   n eine ganze Zahl von mindestens 30 ist,

   (B) Organopolysiloxanharz mit einem Molekulargewicht von maximal 20 000 aus Einheiten der allgemeinen Formel

   $$(RO)_eR^2{}_aSiO_{\frac{4-a-e}{2}} \qquad (II),$$

   wobei

   $R^2$ gleich oder verschieden sein kann und eine für $R^1$ angegebene Bedeutung hat,
   R gleich oder verschieden sein kann und Wasserstoffatom oder Alkylrest mit 1 bis 6 Kohlenstoffatomen bedeutet,
   a 0, 1, 2 oder 3 und
   e 0, 1, 2 oder 3 ist, mit der Maßgabe, daß die Summe

   aus a und e kleiner oder gleich 3 ist und a sowie e jeweils durchschnittlich größer Null sind, und

   (C) basischen Stickstoff aufweisende Verbindung.

2. Wäßrige Dispersionen von Organopolysiloxanen gemäß Anspruch 1, dadurch gekennzeichnet, daß Organopolysiloxanharz (B) in Mengen von 0,1 bis 100 Gewichtsteilen, bezogen auf 100 Gewichtsteile kondensationsfähige Gruppen aufweisendes Organopolysiloxan (A), eingesetzt wird.

3. Wäßrige Dispersionen von Organopolysiloxanen gemäß Anspruch 1 oder 2, dadurch gekennzeichnet, daß als basischen Stickstoff aufweisende Verbindungen (C) Organosiliciumverbindungen mit mindestens einem basischen Stickstoff aufweisenden organischen Rest aus Einheiten der Formel

   $$R^4{}_bY_cSi(OR^5)_dO_{\frac{4-b-c-d}{2}} \qquad (IV)$$

eingesetzt werden, worin

$R^4$ gleich oder verschieden sein kann und einen einwertigen, von basischem Stickstoff freien organischen Rest bedeutet,
$R^5$ gleich oder verschieden sein kann und Wasserstoffatom, einen Alkylrest, Alkalimetallkation, Ammonium- oder Phosphoniumgruppe bedeutet,
Y gleich oder verschieden sein kann und einen einwertigen, SiC-gebundenen Rest mit basischem Stickstoff bedeutet,
b 0, 1, 2, oder 3,
c 0, 1, 2, 3 oder 4 und
d 0, 1, 2 oder 3 ist,

mit der Maßgabe, daß die Summe aus b, c und d kleiner oder gleich 4 ist und pro Molekül mindestens ein Rest Y anwesend ist.

**4.** Wäßrige Dispersionen von Organopolysiloxanen gemäß einem oder mehreren der Ansprüche 1 bis 3, dadurch gekennzeichnet, daß basischen Stickstoff aufweisende Verbindung (C) in einer solchen Menge eingesetzt wird, daß der Gehalt an basischem Stickstoff 0,01 bis 5 Gewichtsteile, bezogen auf 100 Gewichtsteile kondensationsfähige Gruppen aufweisendes Organopolysiloxan (A), beträgt.

**5.** Wäßrige Dispersionen von Organopolysiloxanen gemäß einem oder mehreren der Ansprüche 1 bis 4, dadurch gekennzeichnet, daß Emulgator (D) in Mengen von 0,5 bis 10 Gewichtsteile, bezogen auf 100 Gewichtsteile kondensationsfähige Gruppen aufweisendes Organopolysiloxan (A), eingesetzt werden.

**6.** Wäßrige Dispersionen von Organopolysiloxanen gemäß einem oder mehreren der Ansprüche 1 bis 5, dadurch gekennzeichnet, daß Füllstoffe (E) in Mengen von 0,1 bis 200 Gewichtsteilen, jeweils bezogen auf 100 Gewichtsteile kondensationsfähige Gruppen aufweisendes Organopolysiloxan (A), verwendet werden.

**7.** Verfahren zur Herstellung der wäßrigen Dispersionen von Organopolysiloxanen gemäß einem oder mehreren der Ansprüche 1 bis 6, dadurch gekennzeichnet, daß

(A) kondensationsfähige Gruppen aufweisendes Organopolysiloxan gemäß Formel (I),
(B) Organopolysiloxanharz mit einem Molekulargewicht von maximal 20 000 aus Einheiten der Formel (II) und gegebenenfalls Emulgator (D) sowie gegebenenfalls (F) Zusatzstoffe miteinander vermischt und dispergiert werden und anschließend (C) basischen Stickstoff aufweisende Verbindungen und gegebenenfalls Füllstoff (E) eingearbeitet werden.

**8.** Verwendung der wäßrigen Dispersionen gemäß einem oder mehreren der Ansprüche 1 bis 6 sowie hergestellt nach dem Verfahren gemäß Anspruch 7 als Dichtungs- oder Beschichtungsmassen.

## Claims

**1.** Aqueous dispersions of organopolysiloxanes which are free from organic transition metal compounds and organic compounds of metals of main group III, IV and V and can be prepared using the starting substances

(A) organopolysiloxane containing groups which can undergo condensation, of the formula

$$HO\text{-}[SiR^1{}_2O]_n\text{-}H \qquad (I)$$

in which

$R^1$ is identical or different hydrocarbon radicals having 1 to 18 carbon atoms, which are optionally substituted by halogen atoms, amino groups, ether groups, ester groups, epoxide groups, mercapto groups, cyano groups or (poly)glycol radicals, the latter being built up from oxyethylene and/or oxypropylene units, and
n is an integer of at least 30,

(B) organopolysiloxane resin having a molecular weight of not more than 20,000, comprising units of the general formula

$$(RO)_e R^2_a SiO_{\frac{4-a-e}{2}} \quad (II),$$

in which

$R^2$ can be identical or different and has one of the meanings given for $R^1$,
R can be identical or different and is a hydrogen atom or alkyl radical having 1 to 6 carbon atoms,
a is 0, 1, 2 or 3 and
e is 0, 1, 2 or 3, with the proviso that the sum of a and e is less than or equal to 3 and a and e in each case are on average greater than zero, and

(C) compound containing basic nitrogen.

**2.** Aqueous dispersions of organopolysiloxanes according to Claim 1, characterized in that organopolysiloxane resin (B) is employed in amounts of 0.1 to 100 parts by weight per 100 parts by weight of organopolysiloxane (A) containing groups which can undergo condensation.

**3.** Aqueous dispersions of organopolysiloxanes according to Claim 1 or 2, characterized in that the compounds (C) containing basic nitrogen employed are organosilicon compounds having at least one organic radical containing basic nitrogen, comprising units of the formula

$$R^4_b Y_c Si(OR^5)_d O_{\frac{4-b-c-d}{2}} \quad (IV),$$

in which

$R^4$ can be identical or different and is a monovalent, organic radical which is free from basic nitrogen,
$R^5$ can be identical or different and is a hydrogen atom, an alkyl radical, an alkali metal cation, or an ammonium or phosphonium group,
Y can be identical or different and is a monovalent, SiC-bonded radical containing basic nitrogen,
b is 0, 1, 2 or 3,
c is 0, 1, 2, 3 or 4 and
d is 0, 1, 2 or 3,

with the proviso that the sum of b, c and d is less than or equal to 4 and at least one radical Y is present per molecule.

**4.** Aqueous dispersions of organopolysiloxanes according to one or more of Claims 1 to 3, characterized in that the compound (C) containing basic nitrogen is employed in an amount such that the content of basic nitrogen is 0.01 to 5 parts by weight per 100 parts by weight of organopolysiloxane (A) containing groups which can undergo condensation.

**5.** Aqueous dispersions of organopolysiloxanes according to one or more of Claims 1 to 4, characterized in that emulsifiers (D) are employed in amounts of 0.5 to 10 parts by weight per 100 parts by weight of organopolysiloxane (A) containing groups which can undergo condensation.

**6.** Aqueous dispersions of organopolysiloxanes according to one or more of Claims 1 to 5, characterized in that fillers (E) is [sic] used in amounts of 0.1 to 200 parts by weight, in each case per 100 parts by weight of organopolysiloxane (A) containing groups which can undergo condensation.

**7.** Process for the preparation of the aqueous dispersions of organopolysiloxanes according to one or more of Claims 1 to 6, characterized in that

(A) organopolysiloxane containing groups which can undergo condensation, according to formula (I),

(B) organopolysiloxane resin having a molecular weight of not more than 20,000, comprising units of the formula (II), and

if appropriate emulsifier (D) and if appropriate (F) additives are mixed with one another and dispersed, and subsequently (C) compounds containing basic nitrogen and if appropriate filler (E) are incorporated.

**8.** Use of the aqueous dispersions according to one or more of Claims 1 to 6 and prepared by the process according to Claim 7 as sealing or coating compositions.

**Revendications**

**1.** Dispersions aqueuses d'organopolysiloxanes, qui sont exemptes de composés organiques de métaux de transition ainsi que de composés organiques des métaux des groupes IIIA, IVA et VA, pouvant être préparées par utilisation des matières de départ

(A) organopolysiloxane comportant des groupes capables de condensation, de formule

$$HO\text{-}[SiR^1{}_2O]_n\text{-}H \quad (I),$$

où

$R^1$ représente des radicaux hydrocarbure identiques ou différents avec 1 à 18 atomes de carbone, qui sont facultativement substitués par des atomes d'halogène, des groupes amino, des groupes éther, des groupes ester, des groupes époxy, des groupes mercapto, des groupes cyano ou des radicaux (poly) glycol, ces derniers étant construits à partir d'unités oxyde d'éthylène et/ou oxyde de propylène, et
n est un nombre entier d'au moins 30,

(B) résine organopolysiloxane avec un poids moléculaire d'au maximum 20 000, d'unités de formule

$$(RO)_eR^2{}_aSiO_{4\text{-}a\text{-}e/2} \quad (II),$$

où

$R^2$ peut être identique ou différent et a l'une des significations données pour $R^1$;
R peut être identique ou différent et représente un atome d'hydrogène ou un radical alcoyle avec 1 à 6 atomes de carbone;
a est 0, 1, 2 ou 3, et
e est 0, 1, 2 ou 3,

avec la condition que la somme de a et e est inférieure ou égale à 3 et que a ainsi que e sont chacun, en moyenne supérieurs à 0, et
(C) composé comportant un azote basique.

**2.** Dispersions aqueuses d'organopolysiloxanes suivant la revendication 1, caractérisées en ce que la résine organopolysiloxane (B) est utilisée en des quantités de 0,1 à 100 parties en poids, sur base de 100 parties en poids de l'organopolysiloxane (A) comportant des groupes capables de condensation.

**3.** Dispersions aqueuses d'organopolysiloxanes suivant la revendication 1 ou 2, caractérisées en ce que l'on utilise comme composé (C) comportant un atome d'azote basique, des composés organosiliciques avec au moins un radical organique comportant un azote basique, d'unités de formule

$$R^4{}_bY_cSi(OR^5)_dO_{4\text{-}b\text{-}c\text{-}d/2} \quad (IV)$$

où

$R^4$ peut être identique ou différent et représente un radical organique monovalent, exempt d'azote basique;
$R^5$ peut être identique ou différent et représente un atome d'hydrogène, un radical alcoyle, un cation de métal alcalin, un groupe ammonium ou phosphonium;
Y peut être identique ou différent et représente un radical monovalent, à liaison Si-C, avec un azote basique;
b est 0, 1, 2 ou 3;
c est 0, 1, 2, 3 ou 4, et
d est 0, 1, 2 ou 3,

avec la condition que la somme de b, c et d est inférieure ou égale à 4 et que par molécule, au moins un radical Y est présent.

**4.** Dispersions aqueuses d'organopolysiloxanes suivant l'une ou plusieurs des revendications 1 à 3, caractérisées en ce que le composé (C) comportant un azote basique est utilisé en une quantité telle que la teneur en azote basique atteigne 0,01 à 5 parties en poids, sur base de 100 parties en poids de l'organopolysiloxane (A) comportant des groupes capables de condensation.

**5.** Dispersions aqueuses d'organopolysiloxanes suivant l'une ou plusieurs des revendications 1 à 4, caractérisées en ce que l'on utilise un émulsionnant (D) en des quantités de 0,5 à 10 parties en poids, sur base de 100 parties en poids de l'organopolysiloxane (A) comportant des groupes capables de condensation.

**6.** Dispersions aqueuses d'organopolysiloxanes suivant l'une ou plusieurs des revendications 1 à 5, caractérisées en ce que l'on utilise des charges (E) en des quantités de 0,1 à 200 parties en poids, chaque fois sur base de 100 parties en poids de l'organopolysiloxane (A) comportant des groupes capables de condensation.

**7.** Procédé de préparation des dispersions aqueuses d'organopolysiloxanes suivant l'une ou plusieurs des revendications 1 à 6, caractérisé en ce que l'on mélange les uns avec les autres et que l'on disperse

(A) l'organopolysiloxane comportant des groupes capables de condensation suivant la formule (I),
(B) la résine organopolysiloxane avec un poids moléculaire de au maximum 20 000, d'unités de formule (II), et

facultativement, l'émulsionnant (D) ainsi que facultativement, (F) des additifs et ensuite, que l'on ajoute (C) les composés comportant un azote basique et facultativement, les charges (E).

**8.** Utilisation des dispersions aqueuses suivant l'une ou plusieurs des revendications 1 à 6 ainsi que préparées suivant la revendication 7, comme substances d'étanchéité ou de revêtement.